(19) Europäisches Patentamt
European Patent Office
Office européen des brevets

(11) Publication number: **0 065 090**
**B1**

(12) # EUROPEAN PATENT SPECIFICATION

(45) Date of publication of patent specification: **07.08.85**

(51) Int. Cl.$^4$: **G 02 B 26/10,** H 04 N 1/024

(21) Application number: **82102221.7**

(22) Date of filing: **18.03.82**

(54) **Optical scanning systems with passive control.**

(30) Priority: **14.05.81 US 263648**

(43) Date of publication of application:
**24.11.82 Bulletin 82/47**

(45) Publication of the grant of the patent:
**07.08.85 Bulletin 85/32**

(84) Designated Contracting States:
**DE FR GB IT**

(56) References cited:
**EP-A-0 021 852**
**FR-A-2 394 105**
**US-A-3 360 659**
**US-A-3 897 132**
**US-A-4 054 360**

(73) Proprietor: **International Business Machines Corporation**
**Old Orchard Road**
**Armonk, N.Y. 10504 (US)**

(72) Inventor: **Garwin, Richard Lawrence**
**16 Ridgecrest East**
**Scarsdale New York 10583 (US)**

(74) Representative: **Grant, Iain Murray**
**IBM United Kingdom Patent Operations Hursley Park**
**Winchester, Hants, SO21 2JN (GB)**

**EP 0 065 090 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to optical scanning systems with passive control. Basically an optical scanning system comprises a beam of light (infrared or ultraviolet) scanned over a target area by means of reflection from a rotating mirror or a series of rotating mirrors. The beam generator and any other optical elements in the systems save for the rotating mirror are fixed but not necessarily in the position which theory stipulates. Typically, with a sequence of mirror facets mounted on a drum, not all are truly parallel to the axis of rotation of the drum which, assuming no optical path redirection, will make successive scans "walk up and down" the target area in the direction of the axis of rotation due to "tilt". This invention started from an attempt to solve this problem, the solution to which turns out to have been disclosed in US—A—3,897,132, but ended up solving a different problem. As disclosed in the aforesaid patent, a pair of reflective surfaces turn the optical path back onto the mirror in a plane to which the common axis of the reflective surfaces is a normal, with the result that the angle between the incident beam and the ultimate reflected beam is a function solely of the angle between the reflective surfaces. However, it was observed that, in a plane perpendicular to the aforesaid plane, the angle subtended by the two beams is twice the angle of incidence and thus the reflective surface combination, when relatively rotated, has a vector effect depending on its orientation and can be used to limit the scan effect, in the normal sense of scan, though it will not fully eliminate the subsidiary scan effect due to tilt. The mechanism can be doubled or trebled up at different orientations but a fixed beam will result from two such mechanism in tandem if they are mutually pependicular.

It is noted that US—A—3 360 659 shows focal length compensation for different path lengths due to the rotating mirror by double reflection from the rotating surface in a lensed system, while path length compensation is shown in US—A—3 709 602 using a pair of reflecting surfaces. We know of no art which shows looping the optical path using two inclined fixed mirrors to provide scan length limiting control in a moving mirror optical scanning system.

Accordingly the present invention can be defined as an optical scanning system including a mirror mounted for rotation about an axis together with a relatively fixed beam source directed at the mirror and a plurality of relatively fixed optical elements, including reflective surfaces positioned to form a loop in the optical path in the system so that there is double reflection from the rotating mirror, scanning the beam across a target area generally perpendicularly to the axis of rotation in the optical path characterised in that, for scan length limiting control purposes, the planes of two of the reflective surfaces forming a loop in the optical path in the system intersect at a line subtending an angle of less than 90° with the direction of scan variation in the loop.

Returning to the general background of rotating mirror scanners, there are two types of apparatus that employ this principle. In one type, an image is modulated in a light beam. The moving mirror provides one axis of a two-dimensional area scan. The reflected light from the mirror strikes a second surface with movement in a direction orthogonal to the movement of the mirror providing the second axis of the two-dimensional area scan. An image assembled on an area of the second surface then can be either displayed or printed.

In the second type of apparatus, light that is reflected from an object as it is scanned is returned to the moving mirror which directs a beam containing the scanned details of the surface of the object to what is generally a small area such as a phototube or photoconversion integrated circuit chip.

In each of these types of apparatus, but particularly in the second of them, being able to ensure that all the available radiation falls on the target area by limiting the maximum possible scan length provides a clear advantage, the more so because it can be combined with tilt compensation.

The invention will be described further by way of example with reference to embodiments thereof as illustrated in the accompanying drawings in which:

FIG. 1 is a schematic illustration of a primitive optical scanning system showing the effect of tilt of the moving mirror;

FIG. 2 is a schematic illustration showing the effect in the system of Figure 1 of the tilt compensation of US—A—3,897,132 and indicating the compromise form of the modification thereto, in terms of the angle β, which lies at the heart of the invention;

FIG. 3 illustrates a general type of prior art optical system, wherein the moving mirror apparatus is a plurality of mirror facets on the periphery of a disk (or drum), to which the modification of the present invention is applicable;

FIG. 4 is a top view of the system of Fig. 3;

FIG. 5 is a side view of the system of Fig. 3;

FIG. 6 is an illustration of the capability to narrow the scan area by limiting the travel on the second surface by alteration of the angle β according to the present invention;

FIGS. 7, 8 and 9 illustrate optical paths in composite systems incorporating both the scan length limitation of the present invention and, independently, the tilt compensation of the prior art.

In accordance with the original problem considered and found to have already been solved by the prior art, when the light beam being reflected from a moving mirror is reflected from each facet of a pair of mirrors, the planes of which intersect at a line at right angles to the axis of tilt and at right angles to the axis of rotation of the mirror, and then the beam is reflected back to the moving mirror, the effect of any variation in tilt of the moving mirror orthogonal to the direction of the motion of the mirror will be compensated. The mirrors are two plane mirrors that are joined at an angle to each other along a line. This structure may be referred to as a dihedral mirror assembly.

The subsequent facility provided by the invention is that the line of intersection of the planes of the two intersecting mirrors or, in other words, the spine of the dihedral mirror assembly when rotated with respect to the direction of movement of the moving mirror operates to narrow the travel of the light beam that is reflected to the photoresponsive area, though, if no other action is taken, the tilt compensation will be reduced. With this capability, two advantages are gained. The distance traversed on the photoresponsive surface is adjustable permitting enlargement and reduction, and where the moving mirror apparatus is made up of facets on the periphery of a disk, the number of facets required becomes adjustable.

It is noted that, in both arrangements, a line image of the beam is not formed on the mirror facets so that the arrangement is intrinsically capable of handling very high pulse laser power.

Referring to FIG. 1, there is shown a prior art schematic illustration of one type of apparatus, that of a light beam printing or display device to which both arrangements may be applied for improvement.

In this illustration, there is a light source 1 which is typically a laser which provides a light beam through a modulator 2 into which an optical image is introduced for modulation into the light beam which emerges labelled element 3. The modulated light beam 3 strikes the mirror 4. When the mirror 4 is moved such as by rotation or oscillation so that the ends move in the direction shown by the arrows, the light beam 3 is reflected in a beam 5 which would transverse a line on a second photoresponsive surface labelled element 6. The photoresponsive surface 6 can be provided with motion as shown by the arrow that is perpendicular to the mirror 4 movement. The mirror 4 movement and the photoresponsive area 6 movement in combination define the xy axes of an area scan.

In such a structure, it will be apparent that the tilt angle α of the moving mirror 4 must remain constant during the travel or the light beam 5 will not follow a straight line on element 6. The effect of a change in the angle α is illustrated by the dotted line 7.

In the various structures, control of the tilt of the angle α is a critical and an expensive aspect of the structure. Where the motion of the moving mirror is vibrating or oscillating, the motion must be around one axis so that the moving mirror will remain in one plane throughout the travel or the place on the photoresponsive surface where the reflected beams strike will not be precise.

The most popular structure for this type of apparatus consists of a disk or drum with the mirror 4 being a plurality of facets mounted around the periphery. This type of structure requires great care to insure that all moving mirror facets have the same identical a with respect to each other or the light beam will not strike a predictable location on the surface 6.

Referring to Fig. 2, a schematic illustration of the invention is provided wherein elements 1 and 2 of Fig. 1 are no longer shown. The information containing beam 3 is reflected, as in US—A—3,879,132, from the moving mirror 4 at a first point 8 to a first facet 9 of a dihedral mirror assembly having a spine 10 and then from a second facet 11 of the dihedral mirror assembly back to a point 12 on the moving mirror 4. The result is that even with variation in the angle α, the trace of the beam 5 across the area 6 will remain a series of straight parallel lines as the area 6 advances incrementally in the direction of the arrow for each period of motion of the moving mirror 4 or the passage of each facet where the moving mirror is a plurality of facets on the periphery of a disk.

An advantage is achieved in the above arrangement, at the expense of a measure of tilt compensation, by rotation of the spine or line of intersectin 10 of the dihedral mirror assembly through the angle β which operates to change the sweep of the beam 5 and to change the travel on the member 6. The travel of the beam 5 on the surface 6 is greatest when the line of intersection 10 is horizontal or parallel to the direction of motion of the moving mirror. The scan of beam 5 is essentially shut off when the line of intersection 10 is perpendicular and adjustable for values of β in between. Where the apparatus is of the scanning type, where light reflected from an object comes in as beam 3 and is reflected out beam 5 to a small photosensitive member, such as a phototube or photosensitive integrated circuit, the ability in accordance with the invention to limit the effect of variations in α and through adjustment of β to control the beam travel on the photosensitive member so as to get all the light to the small photosensitive member provides a substantial improvement.

In its simplest terms tilt compensation or scan length control involve simply a retroreflection of the light beam from the movable mirror to a pair of inclined reflective surfaces, say the first and then a second facet of a dihedral mirror and then back to the movable mirror and thence to the region where the beam will be utilised.

Referring to Figs. 3, 4 and 5, which respectively are a perspective view, a top view and a side view of a prior art arrangement for tilt compensation, wherein the moving mirror apparatus is a series of individual facets of a polygonal faceted disk.

In Fig. 3, the moving mirror is one of a plurality of facets 4 on the periphery of a disk 20 equipped for rotation around an axis 21. When light beam 3 strikes the facet at point 8, it is reflected to the facet 9 of a dihedral mirror assembly which is joined at a spine or line 10 then to facet 11 and thereafter back to the moving mirror 4 at point 12 from which it emerges as light beam 5.

Referring to Fig. 4, which is the top view, illustrates the position of the spine 10 with respect to the movement of mirror 4. The beam 3 strikes the moving mirror 4 at point 8 where it is reflected to the dihedral mirror assembly having the spine 10 parallel to the direction of rotation. The reflected light from beam 3 strikes the lower of the two members of the dihedral mirror 9, is then reflected to the upper member 11 and then back to the moving mirror 4 at point 12 where it is reflected as beam 5.

Referring next to the side view in Fig. 5, the effect on tilt variation α of the moving mirror 4 is illustrated. As in Figs. 3 and 4, the light beam 3 strikes the moving mirror 4 at point 8, is reflected off dihedral mirror facet 9 to dihedral mirror facet 11 and thence back to the moving mirror 4 at point 12 where it emerges as beam 5. The spine 10 of the dihedral mirror assembly is parallel to the direction of motion. In this view, the angle α representing the tilt of the facet is more clearly visible and the ability of the optical compensation to accommodate variations in tilt or angle α is illustrated. As α varies, the angles of reflection from the two facets of the dihedral mirror change in opposite directions and the beam 5 remains parallel to the beam 3.

In more detail, referring to Figs, 3, 4 and 5, the axis of rotation 21 is vertical and the plane of the disk 20 and of the beam 3 is horizontal, and the dihedral mirror assembly will be placed with the spine 10 parallel to the plane of the disk 20. The beam 3 will strike the moving mirror 4, be reflected to the lower facet 9 of the dihedral mirror assembly, thence to the upper facet 11 and back to the moving mirror 4 again.

Under these circumstances, if the direction perpendicular to the face of the moving mirror 4 makes an angle Ah with respect to the incident beam in the mirror scanning plane, the first reflection from the mirror will be deviated by 2Ah and the beam that has been twice reflected from the facet will be deviated by an angle 4Ah in the horizontal plane. Thus for a given angular beam travel, the moving mirror 4 apparatus with the optical compensation will, when made of a plurality of facets on the periphery of a disk 20, have twice as many facets. Hence, the disk can be constructed to have twice the diameter and move at half the rotational speed.

In the vertical plane, the dihedral mirror assembly takes a beam which enters at an up-angle Av to the horizontal and turns it back parallel to itself. This is most clearly illustrated in connection with Fig. 5 and beam 5 emerges from its second reflection from the moving mirror 4 at point 12 precisely in the horizontal plane independent of the facet tilt α.

If the angle of intersection of the planes of the facets 9 and 11 of the dihedral mirror is not 90° at the spine 10, the retroreflection beam back to the moving mirror is deviated by twice the angle Av by which the included angle between the facets 9 and 11 of the dihedral mirror assembly differs from 90°.

Nevertheless, the angle α of the facet tilt will be precisely corrected for any position of the dihedral mirror assembly so long as the spine 10 is in a horizontal plane essentially parallel to the direction of motion of the moving mirror facet.

It is frequently desirable in applications such as multiple resolution displays and small area sensors to have instances when the output beam will travel different lengths. In some display and printing apparatus this can be achieved by adding to the number of facets on the disk 20.

In accordance with the present invention, a control of the distance traversed on the area 6 by the beam 5 in Fig. 2 is accomplished by changing the orientation of the spine 10 or, in other words, by variation of the angle β. This is shown in more detail in connection with Fig. 6.

Referring next to Fig. 6, by turning the spine 10 of the dihedral mirror assembly from the position shown in Fig. 2 parallel to the direction of motion of the moving mirror 4 to a position approaching perpendicular to the direction of motion, the result will be that the output beam 5 will move closer to the input beam 3.

Through the rotation of the angle β, it is possible to provide a shutter action and that will effectively shut off the scan of beam 5.

The size of the angle β through which the spine 10 departs from horizontal will determine the travel of beam 5 and the length of the scan on the area 7. This is illustrated in connection with Fig. 7.

Referring next to Fig. 7, the spine of the dihedral mirror is twisted through the angle β to a position that is something less than 90° so that the spine 10 is canted. Since for the horizontal position as shown in Fig. 3 there is maximum scan and for the vertical position in Fig. 6 there is minimum scan, effectively shutting off the scan of the beam 5, then in Fig. 7 by changing the angle β between horizontal and vertical, a selection can be made of the desired scan width. The scanning range will be twice the square of the sine of the angle β of the spline 10 from the vertical.

Thus, where a display or printer application is involved, the selectable angle β permits selection of the width of the display or print area. Similarly, where the application is the scanning of an object and the transfer of the beam containing the scanned information to a small photosensitive receiver, the selectable angle β permits positioning the width of the beam travel within the photosensitive reception region.

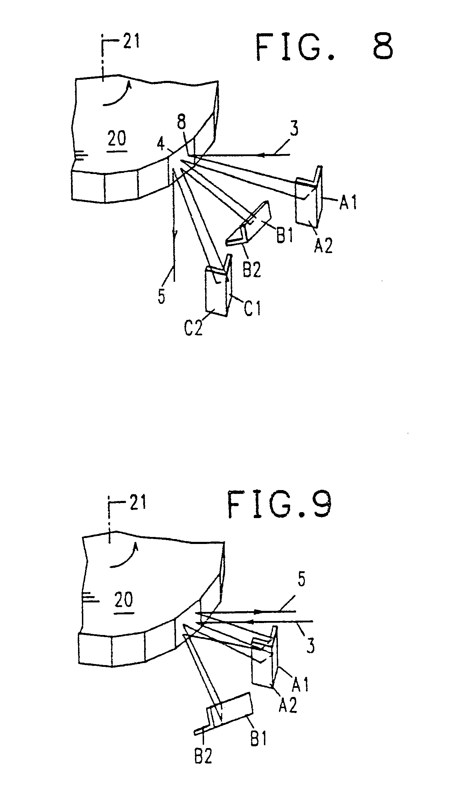

Scan reduction by means of a dihedral mirror gives up facet tilt compensation of the angle α. The advantages of both tilt compensating angle α variation and selecting scan width through angle β variation may be realised in the same structure by employing two scan reducing dihedral mirror assemblies together with a facet tilt compensating dihedral mirror assembly. This arrangement is illustrated in Fig. 8 wherein the moving mirror facet is labelled F, the scan reducing mirror assemblies are labelled A and C and the facet tilt mirror assembly is labelled B. The optical path would then be 3FAFBFC6.

If the spines of mirror assemblies A and C are tilted at precisely the same angle β so that each one by itself would give a 5° scan, the combination of the two would give a 10° scan angle while mirror B will compensate precisely any tilt of facet F. Where mirror assembly B changes the up-angle introduced by mirror assembly A into a precisely equal down-angle, this is restored very largely to the horizontal plane by the identically positioned mirror assembly C. The compensation is almost precise when the angle β of the spine of mirror assembly C is precisely the same as that of the spine of mirror assembly A.

Referring next to Fig. 9, a simplification is accomplished by combining the two scan reducing mirror assemblies A and C by reflecting from different parts of the same facets of the same mirror assembly. To do this, mirror assembly B, the facet F tilt compensating mirror assembly, is arranged to send the ray reflected from the facet F again to mirror assembly A at a different spot, thus eliminating mirror assembly C of Fig. 8. In this the path is 3—F—A1—A2—F—B1—B2—F—A2—A1—F—6.

What has been described is a modification of the prior art optical tilt compensation or control from a moving mirror where the beam is reflected off two inclined reflective surfaces and back to the same moving mirror and the use of the reflection path to control both scan width and facet tilt. The technique has low cost achromaticity which permits it to be used in the ultraviolet and infrared without modification.

## Claims

1. An optical scanning system including a mirror (4) mounted for rotation about an axis together with a relatively fixed beam source (1, 2) directed at the mirror and a plurality of relatively fixed optical elements, including reflective surfaces (9, 11) positioned to form a loop in the optical path in the system so that there is double reflection from the rotating mirror, scanning the beam across a target area (6) generally optically perpendicularly to the axis of rotation in the optical path, characterised in that, for scan length limiting control purposes, the planes of two of the reflective surfaces (9, 11) forming a loop in the optical path in the system intersect at a line (10) subtending an angle (β) of less than 90° with the direction of scan variation in the loop (Fig. 6, 7).

2. A system as claimed in claim 1, characterized in that there is at least one additional pair of reflective surfaces (B1, B2), the common axis of which lies at an angle, relative to the axis of rotation of the mirror, between zero and a right angle, the optical path making a double loop to the mirror or the same facet (F) if the rotating mirror is a multifacetted drum mirror (20) mounted for rotation about its axis (21), the reflective surfaces being arranged to loop the optical path onto each single facet in turn, the combined effect of the plural pairs of mirrors (A1, A2; B1, B2) providing both tilt compensation and scan length limiting (Fig. 8, 9).

## Revendications

1. Système de balayage optique comportant un miroir (4) monté de manière à tourner autour d'un axe, ainsi qu'une source de faisceau (1, 2) fixe et orientée vers le miroir, une pluralité d'éléments optiques fixes les uns par rapport aux autres, incluant des surfaces réfléchissantes (9, 11) disposées de manière à former une boucle sur le trajet optique à l'intérieur du système de telle sorte qu'il se produit une réflexion double à partir du miroir rotatif, avec déplacement du faisceau balayant une surface formant cible (6) qui est d'une manière générale perpendiculaire du point de vue optique à l'axe de rotation, sur le trajet optique, caractérisé en ce que, pour la commande de limitation de la longueur du balayage, les plans de deux surfaces réfléchissantes (9, 11) formant une boucle sur le trajet optique dans le système s'intersectent suivant une droite (10) faisant un angle (β) de moins 90° avec la direction de variation du balayage dans la boucle (figures 6, 7).

2. Système tel que revendiqué dans la revendication 1, caractérisé en ce qu'il est prévu au moins un couple supplémentaire de surfaces réfléchissantes (B1, B2), dont l'axe commun fait par rapport à l'axe de rotation du miroir, un angle compris entre zéro et un angle droit, le trajet optique formant une boucle double jusqu'au miroir ou à la même facette (F), si le miroir rotatif est un miroir (20) en forme de tambour à facettes multiples monté de façon à pouvoir tourner autour de son axe (21), les surfaces réfléchissantes étant disposées de manière à boucler le trajet optique tour-à-tour sur chaque facette individuelle, l'effet combiné des couples multiples de miroirs (A1, A2, B1, B2) assurant à la fois une compensation de l'inclinaison et une limitation de la longueur de balayage (figures 8, 9).

## Patentansprüche

1. Optisches Abtastsystem, welches einen drehbar um eine Achse drehbaren Spiegel (4) zusammen mit einer auf den Spiegel gerichteten relativ feststehenden Strahlenquelle (1, 2) und einer Anzahl von relativ feststehenden optischen Elementen enthält, welche reflektierende Flächen (9, 11) enthalten, die eine Schleife im optischen Weg im System bildend angeordnet sind, so daß eine Doppelreflexion am drehenden Spiegel auftritt, wodurch der Strahl im optischen Weg eine Zielfläche (6) im wesentlichen optisch senkrecht zur Drehachse abtastet, dadurch gekennzeichnet, daß zu Steuerzwecken für eine Beschränkung der Abtastlänge die Ebenen von zwei der reflektierenden Flächen (9, 11), welche eine Schleife im optischen Weg im System bilden, sich in einer Linie (10) schneiden, die einen Winkel (β) von weniger als 90° mit der Richtung der Abtastvariation in der Schliefe einschließt (Fig. 6, 7).

2. System nach Anspruch 1, dadurch gekennzeichnet, daß wenigstens eine zusätzliches Paar reflektierender Flächen (B1, B2) vorhanden ist, deren gemeinsame Achse bezüglich der Drehachse des Spiegels in einem Winkel zwischen null und einem rechten Winkel liegt, wobei der optische Weg eine Doppelschleife zum Spiegel oder der gleichen Facette (F), wenn der Drehspiegel ein um seine Achse (21) drehbar angebrachter mehrfacettiger Drehspiegel (20) ist, macht, wobei die reflektierenden Flächen so angeordnet sind, daß der optische Weg nacheinander auf jede einzelne Facette geschleift wird, wobei der kombinierte Effekt der mehreren Paare von Spiegeln (A1, A2; B1, B2) sowohl eine Neigungskompensation als auch eine Abtastlängenbegrenzung liefert (Fig. 8, 9).

FIG.1

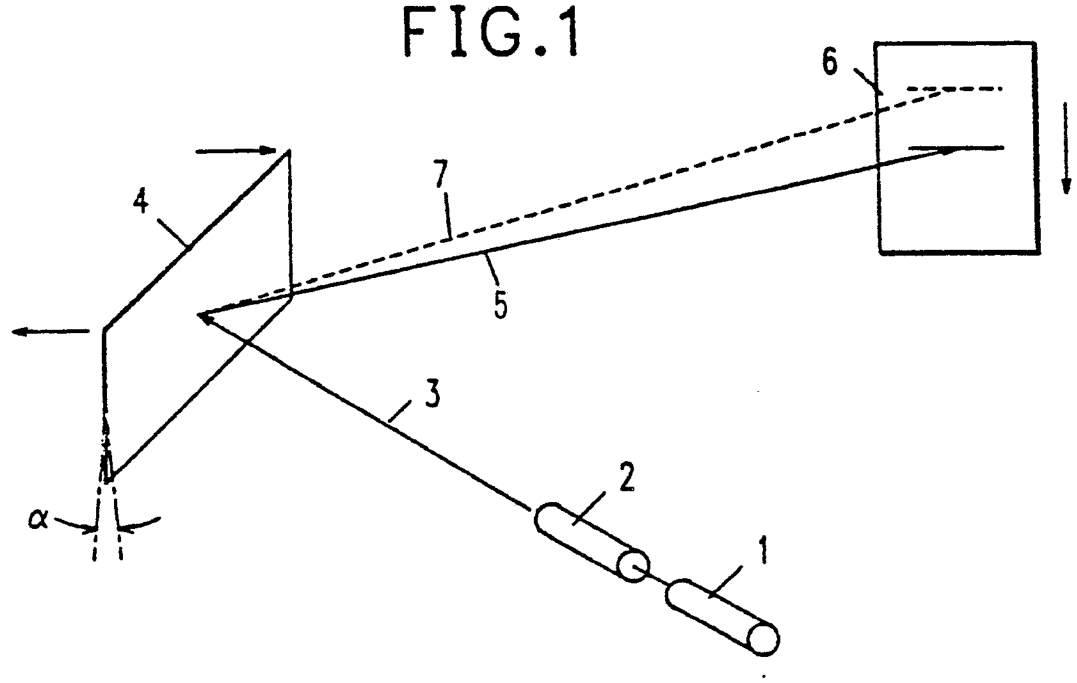


FIG.2

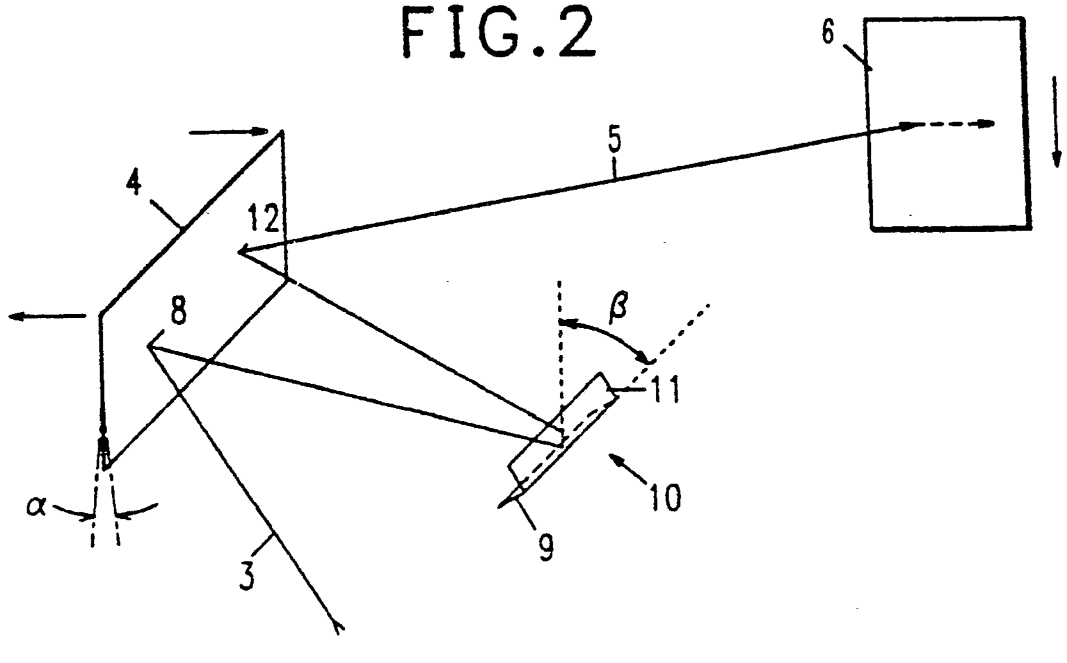

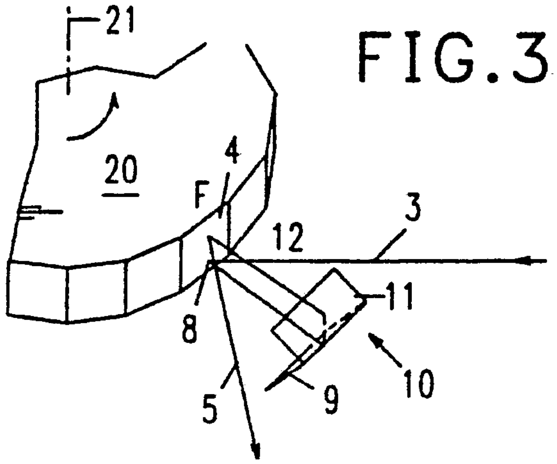


FIG.3

FIG.4

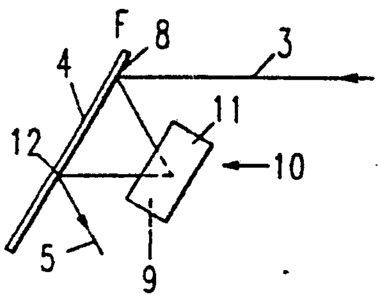


FIG.5

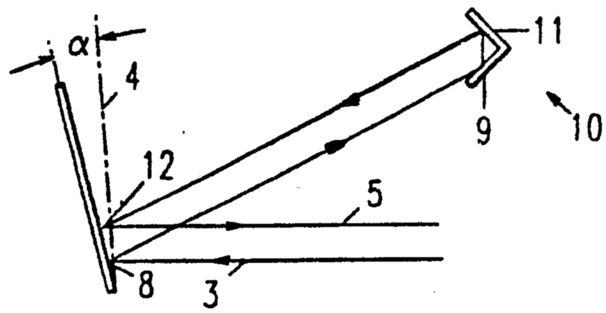

FIG. 6

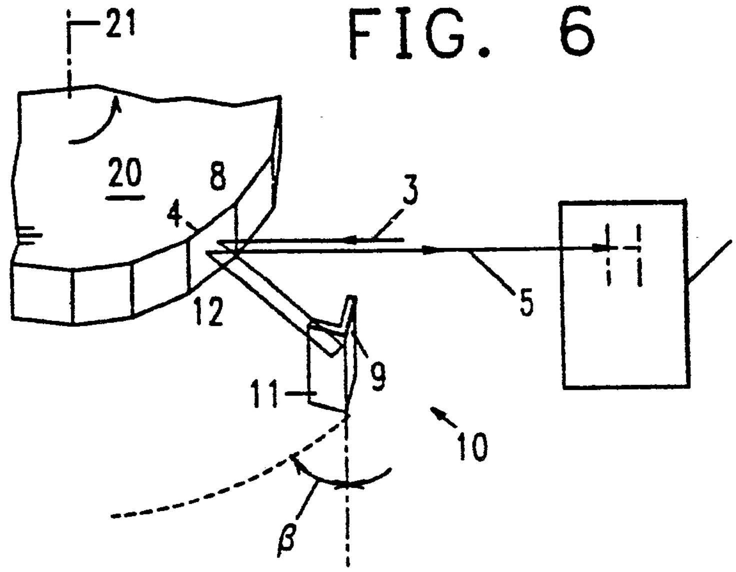


FIG. 7

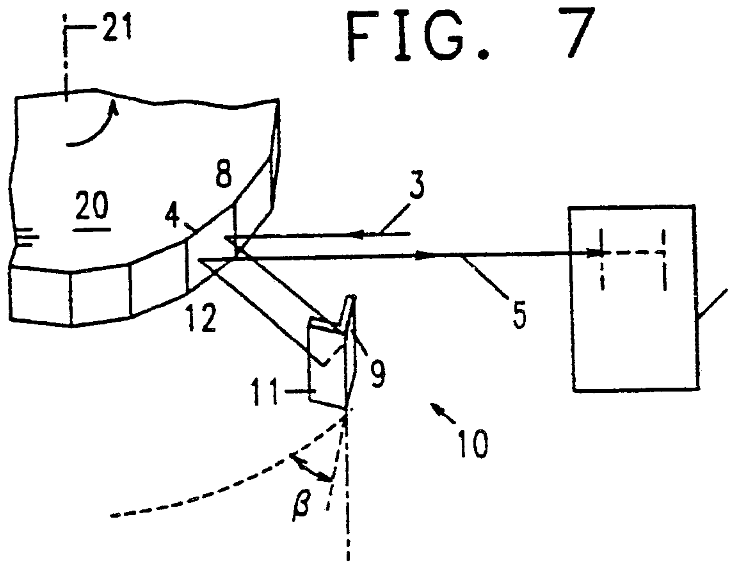

FIG. 8

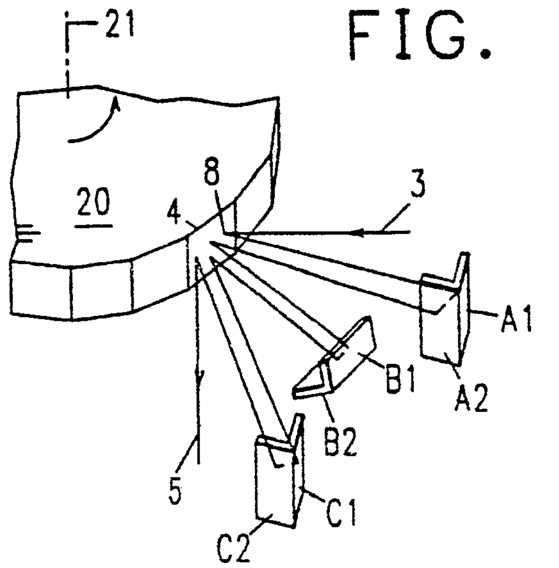


FIG.9